# EUROPÄISCHE PATENTSCHRIFT

(11) **EP 1 260 539 B1**
(45) Veröffentlichungstag und Bekanntmachung des Hinweises auf die Patenterteilung: **23.08.2006**
(21) Anmeldenummer: 02010126.7
(22) Anmeldetag: 10.05.2002
(51) Int. Cl.: C08G 73/10, C08L 79/08, C04B 24/28

(54) **Thixotrope Dispersionen von Polysuccinimid und deren Anwendung**
Thixotrope dispersions from polysuccinimide and their use
Dispersions thixotropes contenant du polysuccinimide et leur utilisation

(30) Priorität: 22.05.2001 DE 10124903
(43) Veröffentlichungstag der Anmeldung: 27.11.2002
(73) Patentinhaber: LANXESS Deutschland GmbH, 51369 Leverkusen (DE)
(72) Erfinder: Klein, Thomas, Dr., 50678 Köln (DE); Voss, Joachim, 51381 Leverkusen (DE); Schmidt, Holger, Dr., 41539 Dormagen (DE); Ebert, Fred, 51373 Leverkusen (DE); Müller, Harry-Günter, 51429 Bergisch Gladbach (DE)

(56) Entgegenhaltungen:
- EP-A- 0 884 344
- DE-A- 19 908 564
- US-A- 6 054 553

## Beschreibung

Die vorliegende Erfindung betrifft stabile thixotrope Polysuccinimid (PSI) Dispersionen, sogenannte Slurries, sowie deren Verwendung als Additiv zur Verbesserung der Fließeigenschaften von Beton, bei Erdölbohrungen, in sauren Gelreinigern sowie Drainagesystemen von Tunnelbauwerken. Stabil im Sinne der vorliegenden Erfindung bedeutet Stabilität in Bezug auf Trennung der festen Phase von der flüssigen Phase.

Polyasparaginsäuren und deren Salze sind in den letzten Jahren auf verstärktes Interesse als biologisch abbaubare Alternativen zu Polyacrylsäuren gestoßen.

Die Herstellung der Polyasparaginsäuren über verschiedene Prozesse wurde bisher eingehend untersucht. Beispielsweise führt die Kondensation von Asparaginsäure oder Ammoniummaleinat bzw. dessen Dehydratisierungsprodukte zu dem Zwischenprodukt Polysuccinimid (PSI), welches durch Hydrolyse unter alkalischen Bedingungen Salze der Polyasparaginsäure bildet. Setzt man Polysuccinimid unter anfänglich neutralen Bedingungen Wasser aus, wird langsam die Polyasparaginsäure gebildet, wobei sich ein pH von 2,5-3 einstellt. Unter sauren Bedingungen kommt bei Raumtemperatur die Hydrolyse zum Stillstand (Mosig, Gooding, Wheeler, Ind. Eng. Chem. Res. 1997, 36, 2163-2170).

Bei den Untersuchungen über die Hydrolyse des PSI im Rahmen der vorliegenden Erfindung wurde insbesondere der Einfluss der Korngröße und damit auch der Phasengrenzfläche Wasser/PSI auf die Hydrolysegeschwindigkeit des PSI selber deutlich. Die Untersuchungen zeigten, dass die Hydrolysegeschwindigkeit direkt proportional der Partikeloberfläche ist. Eine Umsetzung von Polysuccinimid und Wasser unter erhöhtem Druck und erhöhter Temperatur liefert ein Gemisch aus Asparaginsäure und ihren Oligomeren.

Polyasparaginsäuren sind aufgrund ihrer sauren Eigenschaften sehr effektiv bei der Auflösung oder Rückbildung von Ablagerungen, beispielsweise von Calciumcarbonat. Der Effekt gründet zum einen auf dem pH-Wert in unmittelbarer Nähe der sich öffnenden Succinimide im PSI, zum anderen nach der Neutralisation der Polyasparaginsäure auf der dispergierenden Wirkung des Polyaspartat-Anions.

Der Anwendung der Polyasparaginsäure in saurer Umgebung steht allerdings deren Instabilität unter diesen Bedingungen entgegen. Polyasparaginsäure unterliegt einer sauren Hydrolyse zu monomerer Asparaginsäure, insbesondere unter thermischer Belastung (Untersuchungen Bayer AG, Broschüre "PASP Na-Salz" Polyasparaginsäure Natriumsalz; Ein neues, biologisch abbaubares Dispergiermittel, Ausgabe 3.99, Bestell-Nr.: CH 201201). Es konnte gezeigt werden, dass eine 1 %ige Polyasparaginsäure bei pH 4 nach 24 h zu 61 %, bei pH 2 zu 77 % hydrolysiert, was insbesondere bei Erdölbohrungen nachteilig ist.

Reinigungsmittel enthalten oftmals die Viskosität beeinflussende Mittel.

Beispiele für solche Reiniger werden gegeben in US 6 083 890 mit Xanthan als Verdickungsmitel, in US 6 004 916 mit Ammonium-EDTA als Komplexiermittel und einem Lösungsmittel sowie nichtionischen Tensiden als Dispersionsträger sowie in US 5 554 320 mit Phosphorsäure und Paraffinsulfonat, Fettalkohol-EP/PO-Copolymer als Tensid.

Bei der direkten Anwendung von Polyasparaginsäure bei Erdölbohrungen zeigt sich das Problem, dass sich die Polyasparaginsäure durch Diffusion nach Einbringen in das Bohrloch verdünnt. Dadurch werden gegebenenfalls optimale Konzentrationsbereiche unterschritten.

JP-A 8 169 741 beschreibt die Anwendung von pulverigem Polysuccinimid zur Verbesserung des Fließverhaltens von Mörtelmischungen mit Portlandzement. US-A 6 054 533 offenbart eine Dispersion eines Polysuccinimid Polymers in Wasser sowie deren mögliche Verwendung als Additiv für Zement. Die Einarbeitung als Pulver ist jedoch aufwendig, da eine gleichmäßige Verteilung im

Zementmörtel nur durch längeres Vermischen erreicht wird. Eine gleichmäßige Verteilung ist absolut notwendig, da Inhomogenitäten zu Problemen bei der Endhärte des Zements führen. Vorteilhaft wäre die Bereitstellung von PSI als Paste oder Dispersion in Wasser, in der die Benetzung des Polysuccinimids durch Wasser schon erfolgt ist und sich damit die Verklumpung beim Einrühren vermeiden lässt.

Es stellte sich daher die Aufgabe, thixotrope Formulierungen von PSI mit Wasser zu finden, die alle diese Anforderungen hinsichtlich Stabilität und Verflüssigbarkeit erfüllen.

Stabil im Sinne der vorliegenden Erfindung wurde bereits oben skizziert bedeutet aber zudem, dass die thixotropen Dispersionen ihren Zustand und ihre chemisch/physikalische Eigenschaft beibehalten.

Überraschenderweise zeigen thixotrope Dispersionen von PSI mit Wasser gemäß der vorliegenden Erfindung alle diese Eigenschaften.

Gegenstand der vorliegenden Erfindung sind deshalb thixotrope Dispersionen von 10 bis 90 Gew.-% Polysuccinimid und 0,01 bis 20 Gew.-% Tensid in protischen Lösungsmitteln, bevorzugt mit Wasser, besonders bevorzugt entionisiertes Wasser. Bevorzugt enthalten diese zusätzlich ein Hydrokolloid, besonders bevorzugt ein anionisches oder nichtionisches Tensid.

PSI in der für die erfindungsgemäßen thixotropen Dispersionen notwendigen feinkörnigen Beschaffenheit kann gemäß den Verfahren der DE-A 19 706 901 oder EP-A 0 786 487 hergestellt werden.

Die erfindungsgemäßen thixotropen PSI Dispersionen enthalten bevorzugt 30 bis 70 Gew.-% PSI, besonders bevorzugt 40 bis 60 Gew.-% PSI.

Die erfindungsgemäßen thixotropen PSI Dispersionen werden durch intensives Rühren eines feinkörnigen Polysuccinimids mit typischer Korngröße im Maximum wenige hundert µm hergestellt. Idealerweise wird ein PSI mit einem Korndurchmesser von 10 - 250 µm, bevorzugt 10 - 150 µm, besonders bevorzugt von 10 - 100 µm und ganz besonders bevorzugt von 10 - 70 µm im Maximum der Verteilung verwendet. Die große Oberfläche ist vorteilhaft zur raschen Einstellung des Gleichgewichts.

Die erfindungsgemäßen thixotropen PSI Dispersionen enthalten bevorzugt 1 bis 10 Gew.-% Tenside, besonders bevorzugt 1 bis 5 Gew.-% Tenside.

Das Tensid hat die Aufgabe, das PSI möglichst feinteilig zu dispergieren. Hierbei sind nichtionische wie anionische Tenside im Prinzip geeignet, kationische Tenside können aufgrund der positiven Ladung zu Ausflockungen von elektroneutralen Aggregaten mit dem Polyaspartat-Anion führen.

Bevorzugte Tenside im Sinne der vorliegenden Erfindung sind nichtionische Tenside, besonders bevorzugt Fettalkoholethoxylate, ganz besonders bevorzugt C₁₄-C₁₆-Fettalkohole mit Ethoxylierungsgrad von 20 - 40.

Neben Tensiden können die erfindungsgemäßen thixotropen PSI Dispersionen Verdickungsmitel, besonders bevorzugt biologisch abbaubare Verdickungsmittel enthalten.

In einer bevorzugten Ausführungsform werden den thixotropen PSI-Dispersionen biologisch abbaubare Verdickungsmittel zugesetzt.

Als Verdickungsmittel im Sinne der vorliegenden Erfindung werden bevorzugt Celluloseether eingesetzt.

Besonders bevorzugt im Sinne der vorliegenden Erfindung wird als Verdickungsmittel Methylcellulose eingesetzt.

Die erfindungsgemäßen PSI Dispersionen sind erhältlich durch Dispergieren des PSI in einem protischen Lösungsmittel, bevorzugt Wasser, insbesondere entionisiertes Wasser. Zur Herstellung der erfindungsgemäßen Dispersionen, wird zunächst PSI bzw. dessen Copolymere vorgelegt, das Wasser zugegeben und mit einem Ultraturrax - oder einem ähnlichen für den vorliegenden Zweck geeigneten Rührgerät - intensiv homogenisiert. Danach erfolgt die Zugabe des Tensids und eine erneute Durchmischung mit dem Ultraturrax. Schließlich erhält man eine homogene Dispersion, die nach dem Rührvorgang bald erstarrt.

PSI ist deshalb eine Alternative zu Polyasparaginsäure, da es gelingt, PSI in eine feinkörnige, stabile Dispersion zu überführen, die nicht sedimentiert und durch Viskositätsanstieg die Diffusion und damit die Hydrolyse in Wasser weitgehend unterbindet.

Darüber hinaus lässt sich mittels der erfindungsgemäßen PSI-Dispersionen auch eine höhere Lagerstabilität von Polyasparaginsäure erzielen. Im Anwendungsfalle lässt sich eine erfindungsgemäße PSI-Dispersion durch Scherkräfte verflüssigen und damit Polyasparaginsäure im Sinne einer Depotwirkung zur Verfügung stellen. Dabei steht die Menge Polyasparaginsäure, die im Gleichgewicht mit Polysuccinimid unter diesen Bedingungen vorliegt zur Verfügung, um beispielsweise Calciumcarbonat-Inkrustierungen aufzulösen. Die dann durch Neutralisation dem System entzogene Polyasparaginsäure wird durch Hydrolyse nachgebildet, so dass immer ausreichende (aber niedrige) Konzentrationen der freien Polyasparaginsäure zur Verfügung stehen.

Erfindungsgemäße feinkörnige, stabile PSI Dispersionen, sogenannte thixotrope PSI Dispersionen, sind auch als saure Gelreiniger einsetzbar wie sie etwa im Sanitärbereich zur Lösung von Kalkablagerungen verwendet werden. Idealerweise rinnt ein Gelreiniger die zu reinigende Fläche entlang, verdickt sich jedoch nach Ausbleiben von Scherkräften und bleibt somit an der Fläche haften. Die Kontaktzeit, insbesondere bei vertikalen Flächen bleibt mit den erfindungsgemäßen thixotropen PSI Dispersionen, deutlich erhöht und damit auch die Reinigungswirkung.

Im Falle von Erdölbohrungen ist eine thixotrope Dispersion von PSI von Vorteil, die sich nach dem Einpumpen wieder verfestigt und erst nach und nach Polyasparaginsäure freisetzt.

Bei Tunneldrainagen können unter bestimmten Umständen Versinterungen auftreten, die zum Verstopfen des Leitungssystems führen. Oft sind diese Stellen nicht zugänglich. Auch hier ist eine thixotrope PSI gemäß der vorliegenden Erfindung Dispersion von Vorteil, die sich nach dem Einpumpen in das Leitungssystem an den Verstopfungsstellen verfestigt und an Ort und Stelle über eine längere Zeit Wirkstoff (Polyasparaginsäure) freisetzt und zu Konzentrationgradienten mit lokalen Maxima führt.

Die erfindungsgemäßen thixotropen PSI Dispersionen zeigen das gewünschte Viskositätsverhalten, die für die oben genannten Anwendungen notwendige Stabilität sowie Verflüssigbarkeit. Die erfindungsgemäßen PSI Dispersionen, zeigen eine Stabilität von wenigstens 300 Tagen bei Temperaturen von unter 20°C, oder von wenigstens 200 Tagen bei Temperaturen unter 25°C, oder von wenigstens 150 bis 200 Tagen, wenn sie im Temperaturbereich von 25 - 30°C aufbewahrt werden.

Sie sind deshalb geeignet zum Einsatz in Zement oder Beton zur Verbesserung von deren Fließeigenschaften, in Drainagesysteme von Tunnelbauwerken, bei Erdölbohrungen sowie in sauren Gelreinigern.

In sauren Gelreinigern ermöglichen die thixotropen PSI Dispersionen gemäß der vorliegenden Erfindung die Reinigung sanitärer Einrichtungen oder von kratzempfindlichen Oberflächen wie beispielsweise Kunststoffen, Bronze, Messing, Silber, Bleikristall oder Herdplatten aus Glaskeramik.

Die vorliegende Erfindung betrifft deshalb auch Zemente oder Betone sowie Gelreiniger die einen die Fließeigenschaften verbessernden Anteil thixotroper PSI-Dispersionen enthalten.

### Beispiele

### Beispiel 1

Circa 50:50 Gew.-% PSI/Wasser-Slurries werden mit 3-5 Gew.-% Fettalkoholethoxylaten versetzt und mit dem Turrax-Rührer intensiv gerührt. Nach Stehenlassen über 24 Stunden wird mit dem Rotationsviskosimeter die Viskosität in Abhängigkeit vom Schergefälle gemessen. Es zeigt sich eine typische Kurve für thixotrope Flüssigkeiten.

Disponil® ist ein Tensid der Henkel AG

Dehydol® ist ein Tensid der Henkel AG

### Beispiel 2

Wasserbasierte PSI-Slurries können unter Einsatz eines Verdickungsmittels auch mit geringeren Wirkstoffgehalten hergestellt werden, wie das folgende Beispiel zeigt.

10 g Polysuccinimid werden in 250 ml Wasser dispergiert. Die Dispersion sedimentiert innerhalb von 15 Minuten. Eine entsprechende Mischung wird mit 15 g Methylcellulose versetzt und 30 Minuten intensiv gerührt. Die entstandene gelartige Dispersion bleibt über 14 Tage stabil.

### Beispiel 3

Eine Formulierung nach Beispiel 1 ist in der Lage, Calciumcarbonat zu lösen, wie das folgende Beispiel zeigt:

In einem Reaktionsgefäß werden unter Stickstoffatmosphäre 200 ml des Slurrys aus Beispiel 1 mit 10 g fein gepulvertem Kalkstein versetzt und intensiv gerührt. Durch das Gefäß wird ein Stickstoffstrom geführt, der danach durch eine Bariumhydroxidlösung (Barytwasser) geleitet wird. Innerhalb von 5 Minuten ist eine deutliche Trübung der Bariumhydroxidlösung in Folge des aus dem Kalkstein freigesetzten Kohlendioxids zu beobachten. Der Kontrollversuch ohne Polysuccinimid zeigt keine Trübung des Barytwassers.

### Beispiel 4

Zwei aus einem Tunnel stammende Kalksteine werden entweder in 200 ml eines Slurry's aus 60 Gew.-% H₂O und 40 % Gew.-% PSI und 2 Gew.-% Tensid oder in 200 ml Leitungswassers eingelegt und mit einem seitlich davon angeordneten Magnetstäbchen gerührt. Eine Gasentwicklung wird in keinem Fall beobachtet.

Nach einer Woche bei Raumtemperatur werden die Steine entnommen, mit dest. H₂O von noch anhaftendem Slurry befreit und bis zur Gewichtskonstanz getrocknet:

| Stein in PSI-Slurry (Gehalt: 60 % PSI) | Stein in Leitungswasser (17° dH) |
|---|---|
| Ausgangsgewicht: 42,4945 g | Ausgangsgewicht: 40,363 g |
| Endgewicht: 37,5483 g | Endgewicht: 40,359 g |
| Differenz: 4,9462 g = 11,6 % | Differenz: 0,004 g = 0 % |

Der Versuch zeigt deutlich das Auflösen eines Kalksteins zu 11,6 % nach bereits einer Woche ausgelöst durch die Anwendung eines erfindungsgemäßen Slurrys.

### Beispiel 5

In einem Schacht einer Tunneldrainage mit stark reduziertem Wasserfluss (Wasser: pH 8 23°dH) konnten folgende PASP-Konzentrationen erzielt werden nach Ausbringung von 500 g Polysuccinimid bzw. 1000 g Dispersion von PSI:

| | | |
|---|---|---|
| als Tabs | (2,5 cm Durchmesser mit 10 % Stearinsäure verpresst) | ca. 3 ppm |
| als Dispersion | (48,5 % PSI 3 % Dehydol® ) | > 30 ppm |

gemessen 1 Woche nach Ausbringung der PSI-Darreichungsform.

## Patentansprüche

1. Stabile thixotrope Dispersionen von 10 bis 90 Gew.-% feinkörnigem Polysuccinimid (PSI) und 0,01 bis 20 Gew.-% Tensid in protischen Lösungsmitteln.

2. Dispersionen nach Anspruch 1, **dadurch gekennzeichnet, dass** diese ein Hydrokolloid enthalten.

3. Dispersionen nach Anspruch 1, **dadurch gekennzeichnet, dass** diese ein anionisches oder nichtionisches Tensid enthalten.

4. Dispersionen gemäß der Ansprüche 1 bis 3, **dadurch gekennzeichnet, dass** als protisches Lösungsmittel Wasser eingesetzt wird.

5. Dispersionen gemäß der Ansprüche 1 bis 4, **dadurch gekennzeichnet, dass** das Tensid ein Fettalkoholethoxylat ist.

6. Dispersionen nach Anspruch 1, **dadurch gekennzeichnet, dass** sie zusätzlich biologisch abbaubare Verdickungsmittel enthalten.

7. Verfahren zur Herstellung der thixotropen PSI Dispersionen der Zusammensetzung gemäß Anspruch 1, **dadurch gekennzeichnet, dass** man PSI bzw. dessen Copolymere vorlegt, ein protisches Lösungsmittel und Tensid zugibt, die Mischung erneut durchmischt und schließlich die homogene Dispersion nach dem Rührvorgang erstarren lässt.

8. Verwendung der thixotropen PSI Dispersionen gemäß der Ansprüche 1 bis 6 als Additiv zur Verbesserung der Fließeigenschaften von Beton, bei Erdölbohrungen, in sauren Gelreinigern sowie in Drainagesystemen von Tunnelbauwerken.

9. Zemente oder Betone sowie saure Gelreiniger **dadurch gekennzeichnet, dass** diese einen die Fließeigenschaften verbessernden Anteil thixotroper PSI-Dispersionen gemäß Anspruch 1 enthalten.

## Claims

1. Stable thixotropic dispersions of from 10 to 90% by weight of fine polysuccinimide (PSI) and from 0.01 to 20% by weight of surfactants in protic solvents.

2. Dispersions according to Claim 1, **characterized in that** they comprise a hydrocolloid.

3. Dispersions according to Claim 1, **characterized in that** they comprise an anionic or nonionic surfactant.

4. Dispersions according to Claims 1 to 3, **characterized in that** water is used as protic solvent.

5. Dispersions according to Claims 1 to 4, **characterized in that** the surfactant is a fatty alcohol ethoxylate.

6. Dispersions according to Claim 1, **characterized in that** they further comprise biodegradable thickeners.

7. Process for preparing thixotropic PSI dispersions of the composition according to Claim 1, **characterized in that** PSI and/or its copolymers is introduced, a protic solvent and surfactant are added, the mixture is mixed thoroughly again, and finally the homogeneous dispersion is left to solidify after the stirring operation.

8. Use of thixotropic PSI dispersions according to Claims 1 to 6 as additives for improving the flow properties of concrete, in oil wells, in acidic gel cleaners, and in drainage systems of tunnel constructions.

9. Cements or concretes and also acidic gel cleaners, **characterized in that** they comprise a flow-property-improving fraction of thixotropic PSI dispersions according to Claim 1.

## Revendications

1. Dispersions thixotropes stables de 10 à 90 % en poids de polysuccinimide (PSI) à grains fins et 0,01 à 20 % en poids de tensioactif dans des solvants protiques.

2. Dispersions selon la revendication 1, **caractérisées en ce que** celles-ci contiennent un hydrocolloïde.

3. Dispersions selon la revendication 1, **caractérisées en ce que** celles-ci contiennent un tensioactif anionique ou non ionique.

4. Dispersions selon les revendications 1 à 3, **caractérisées en ce que** de l'eau est utilisée en tant que solvant protique.

5. Dispersions selon les revendications 1 à 4, **caractérisées en ce que** le tensioactif est un produit d'éthoxylation d'alcool gras.

6. Dispersions selon la revendication 1, **caractérisées en ce qu'**elles contiennent en outre des épaississants biologiquement dégradables.

7. Procédé pour la préparation des dispersions thixotropes à base de PSI de composition selon la revendication 1, **caractérisé en ce qu'**on dispose au préalable du PSI ou des copolymères de celui-ci, on ajoute un solvant protique et un tensioactif, on homogénéise à nouveau le mélange et on laisse enfin durcir la dispersion homogène après le processus d'agitation.

8. Utilisation des dispersions thixotropes à base de PSI selon les revendications 1 à 6, en tant qu'additif pour l'amélioration des propriétés d'écoulement du béton, dans des forages pétrolifères, dans des produits de nettoyage sous forme de gels acides ainsi que dans des systèmes de drainage d'ouvrages de construction de tunnels.

9. Ciments ou bétons ainsi que produits de nettoyage sous forme de gels acides, **caractérisés en ce que** ceux-ci contiennent une quantité, améliorant les propriétés d'écoulement, de dispersions thixotropes à base de PSI selon la revendication 1.
